# EUROPEAN PATENT APPLICATION

(11) **EP 2 604 494 A1**
(43) Date of publication of application: **19.06.2013**
(21) Application number: 12196622.0
(22) Date of filing: 12.12.2012
(51) Int. Cl.: B62D 53/00, B62D 53/06, B62D 53/08

(54) **A trailer, a combination of a truck and a trailer and a chassis for use in a trailer**

(30) Priority: 12.12.2011 NL 2007945
(71) Applicant: Garage de Jong Leerbroek BV, 4245 TP Leerbroek (NL)
(72) Inventor: De Jong, Cornelis, 4245 TP Leerbroek (NL)
(74) Representative: Plaggenborg, Menko Bernard

(57) **Abstract**

The invention relates to a trailer for a vehicle, comprising: - a first chassis part (23) comprising a king pin at a front end for coupling to a truck, and a wheeled axle for supporting said first chassis part on a ground at a relatively tail end portion; and - a second chassis part (24) comprising a wheeled axle for supporting said second chassis part on the ground, said second chassis part being coupled to said first chassis part. Said trailer is characterized in that said second chassis part and said first chassis part are mutually coupled in a longitudinally slidable and removable way, and in that said second chassis part comprises a fifth wheel; and in that the trailer further comprises a third chassis part (25) comprising a kingpin for coupling to said second chassis' fifth wheel and wherein said third chassis part comprises a wheeled axle for supporting said third chassis part on a ground.

## Description

The present invention relates to a trailer according to the preamble of claim 1. The invention further relates to a combination of a truck and a trailer according to claim 10. Finally, the present invention relates to a chassis for use in a trailer according to the invention as mentioned in claim 11.

Such a trailer is generally known in the art.

For example, US 4 955 629 relates to a trailer comprising a chassis, the tail end comprising an intermediate slidable part. In a first state, said slidable part is positioned entirely within the trailer's chassis, whereas in a second state, it is positioned at least partly outside said chassis. At an intermediate position, a coupling is not envisaged and possible. A tail-end chassis part that is to be coupled through said intermediate part will always be connected hingedly to said trailer's chassis. The slidable part further comprises two guide beams, resulting in a heavy construction. The slidable part is also connected to the trailer's chassis.

US patent 5 860 668 relates to a trailer comprising, at its tail end, a slidable construction with a fifth wheel. Along with the fifth wheel, an axis is displaced, as it is in US 4 955 629. There is no possibility of disconnecting the dolly completely from the trailer's chassis.

US patent 6 318 746 mentions a trailer comprising a king pin at its front end for coupling with a truck's fifth wheel. At its tail end, the trailer comprises a construction for coupling to a front side of a dolly. A rigid coupling between both trailers/chassis is not possible.

Dutch patent application NL 1024460 by Broshuis B.V. at Kampen/NL relates to a trailer combination comprising two connectable chassis parts, wherein the tail end chassis is identical to the front end chassis. A front end coupling means of each chassis part, comprises a kingpin to be connected to a truck's fifth wheel. Each chassis part further comprises a fifth wheel that is positioned within the chassis, to which a front end coupling means of a tail end's chassis part can be coupled. Said coupling is such that only a rigid coupling can be obtained.

Known trailers have a common disadvantage in that the truck needs to be used in combination with a trailer at all times and in that the trailer cannot be adapted. Such is required especially when a trailer carries two containers whereas a single container only has to be unloaded. As a consequence, the truck has to pull the trailer carrying only one container, which increases transporting costs.

It is also known in the art to couple a single trailer to a truck. Such a combination has the disadvantage that only two 20 feet containers can be transported. A 40 feet container, let alone a 45 feet container, cannot be transported using such combination.

The invention aims at providing an improved trailer of the kind as mentioned in the preamble.

The invention especially aims at providing a trailer that can be used efficiently.

The invention especially aims at providing a trailer of the kind mentioned in the preamble with which both a single 40 feet or 45 feet container or a single or two 20 feet containers can be transported.

The invention also aims at providing an improved trailer of the kind as mentioned in the preamble with which a 20 feet container can be unloaded while being mounted on its chassis part it is positioned on, whereas another 20 feet container may be transported to another location together with its chassis part it is positioned on.

So as to obtain at least one of the above identified goals the present invention provides according to a first embodiment a trailer comprising the features of claim 1. The present trailer provides the advantage that both a single 40 feet or 45 feet container can be transported, as well as two 20 feet containers. also, a single 20 feet container can be unloaded, including the chassis part said container is positioned on, whereas the other 20 feet container can be transported towards another location using the truck.

Based on the preceding, it may be concluded that the present invention is novel over the publications mentioned above, since the separate dolly can be coupled with both the front end chassis part and the tail end chassis part, so as to provide a flexible or rigid connection.

It has also shown that the trailer provides a high rate of stability when transporting a single or two 20 feet containers as well as when transporting a 40 feet or 45 feet container. Such a synergetic result was not expected.

It is preferred that both chassis parts (mentioned "chassis" as well) are positionable adjacently, such that the chassis parts are not mutually rotatable or pivotally. This provides the advantage that the trailer obtains a very high stability during transport. Also, this way loads that are longer than the length of a single chassis part, to wit up to the total length of first and second chassis part, can be transported easily and stably.

It is further preferred that both the first and the third chassis part comprise coupling means for coupling said second chassis part in a slidable fashion and for uncoupling same therefrom. Hence, the second chassis part can be coupled behind both the first and the third chassis part (i.e. at its tail end), and as a consequence, each of said first and third chassis part can be coupled to the truck. The other chassis part (i.e. the part that has not been coupled to the truck) can be uncoupled, together with the container positioned thereon, for loading or unloading same.

It is especially preferred that at least one of said first and third chassis parts comprises at least two chassis sub-parts, which are mutually slidable in a longitudinal direction and which are mutually coupled, for varying the length of said chassis part. This way, said chassis part can be extended so as to be able to transport a load having a length that is longer than the standard length of said chassis part. For example, each chassis part may be constructed for transporting a load having a length of 20 feet, like a standard container. By varying the chassis part's length, a 40 feet or 45 feet container may be transported on said chassis part as well.

It is furthermore preferred that the slidable coupling of said first and second chassis part is comprised of at least two beams, for example I-beams or hollow beams, one of said beams being at least partly receivable in said other beam. Such coupling can be manufactured easily and efficiently and provides a very stable construction. As a matter of fact, the coupling may be constructed from two hollow beams, for providing additional stability or for being able to apply two smaller hollow beams instead of a single large hollow beam.

So as to obtain an easily manoeuvrable combination, it is preferred that at least one of the first and third chassis parts comprises a steering axle and/or a liftable axle.

A suitable positioning of a container on a trailer is obtained when a first chassis part is a goose-neck type chassis. Such also provides a relatively low centre of gravity of both an unloaded and a loaded trailer.

For the same reason, it is preferred for the third chassis part to be a goose neck-type chassis.

A broadly applicable trailer is obtained when same is suitable for transporting containers. To that end, twist locks are provided on the trailer, based on the container's dimensions. A person skilled in the art is easily capable of determining the proper positioning.

According to a further aspect, the present invention also relates to a combination of a truck and a trailer according to the invention. Such combination is suitable for transporting loads, for example 20, 30, 40 and 45 feet containers. However, other kinds of loads can be transported using the combination of the present invention. For example, single pieces of load having a maximum length of about 20 feet, can be transported and unloaded on each separate chassis part. Loads having a length of more than 20 feet, for example lengths of up to 40 or 45 feet of even more, can be transported using the combination of the present invention. Such loads, also identified using the term cargo, can be transported by mutually coupling said three chassis parts so as to obtain a trailer length of up to 45 feet or even more. By coupling the third chassis part hingedly to the second chassis part, by means of the fifth wheel, and by extending or telescoping the second chassis part at least partially with respect to the first chassis part, a more flexible combination is obtained suitable for loads of up to 20 feet.

Finally, the present invention relates to a chassis for use in a trailer according to the present invention, said chassis comprising a first chassis part comprising a king pin at its front end for coupling to a truck and a wheeled axle for supporting said chassis part on a ground at a relatively tail end portion; and - a second chassis part comprising a wheeled axle for supporting said second chassis part on the ground, said second chassis part is suitable for being coupled to said first chassis part, characterized in that said second chassis part is coupled slidably to said first chassis part in a longitudinal direction and in that said second chassis part comprises a fifth wheel for coupling to a third chassis part's king pin. By this embodiment, the goals as mentioned above are obtained.

As a result, the present invention provides a combination of a trailer wherein two separate trailers can be easily combined by means of a dolly.

Hereinafter, the invention will be described by means of a drawing. The drawing shows in:
Fig. 1 a trailer according to the invention in a first position and carrying a 40 feet container,
Fig. 2 a trailer according to the invention in a first position and carrying a 45 feet container,
Fig. 3 a trailer according to the invention in a first position and carrying two 20 feet,
Fig. 4 a trailer according to the invention in a second position and carrying two 20 feet containers,
Fig. 5 a trailer according to the invention in a third position and carrying a 20 feet container and a 30 feet container,
Fig. 6 a trailer according to the invention in a fourth position and carrying a 20 feet container and a 40 feet container,
Fig. 7 a trailer according to the invention in a fifth position and carrying a 20 feet container and a 40 feet container,
Fig. 8 a trailer according to the invention in a sixth position and carrying a 20 feet container and a 45 feet container,
Fig. 9 a trailer according to Fig. 8 in a separated condition,
Fig. 10 a trailer according to Fig. 9 in a further separated condition.

In the drawing, the same have parts been identified by means of the same reference numerals. However, for ease of understanding the drawing, not all parts that are required for a practical embodiment have been shown in the drawing.

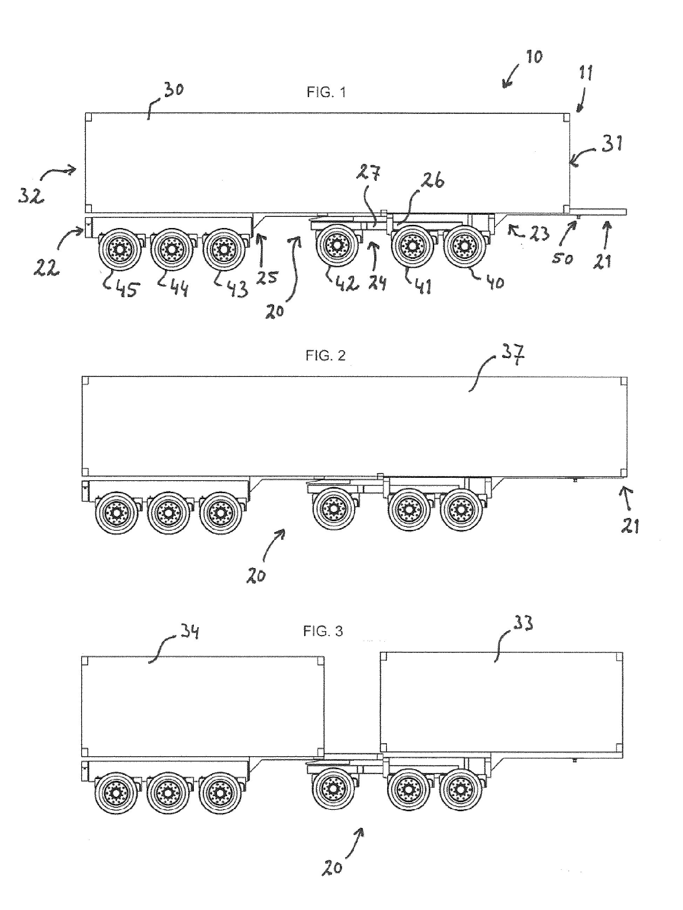

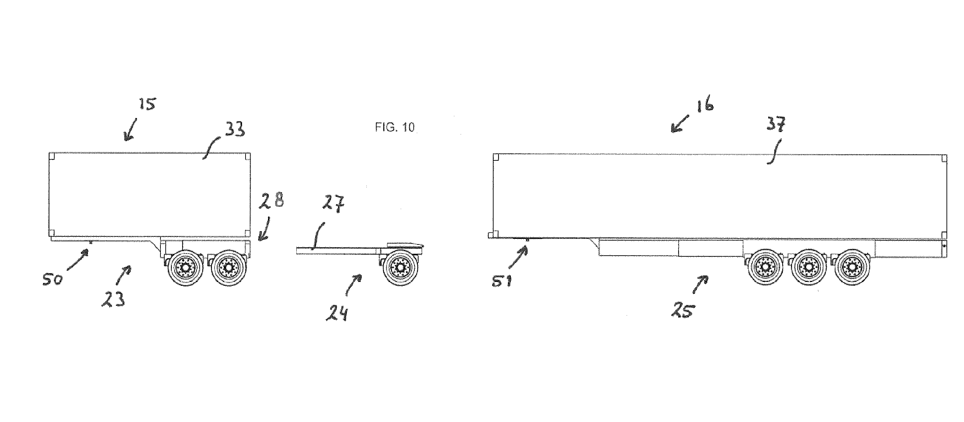

Fig. 1 shows a schematic view from the right of a trailer 10 having a chassis 20 on which a container 30 has been positioned. The container 30 is a 40 feet container. The chassis 20 comprises axles with wheels 40, 41, 42, 43, 44, 45. As a matter of fact, at both ends of said axles, that is to say at both sides of the trailer 10, wheels have been provided. The wheels at the right side of the trailer only are visible in Figures 1-9. Fig. 10 shows the left side of the trailer.

The wheels 40, 41, 43 as shown in Fig. 1 are liftable for improving the trailer's manoeuvrability.

Chassis 20 comprises a kingpin 50 at the trailer's 10 front side 11 for coupling same to a truck's fifth wheel (not shown). In the embodiment as shown, the container's 30 tail end 32 is about aligned with the chassis' tail end 22. The container's 30 front end 31 is about aligned with the chassis' 20 front end 21.

The container 30 is connected to the chassis 20 by means of twist locks.

Fig. 2 shows a variation of the embodiment as shown in Fig. 1. In Fig. 2, a 45 feet container 37 is positioned on the trailer. According to this variation, the 45 feet container's front end is substantially aligned with the chassis' 20 front end 21. The chassis is in both embodiments, according to Fig. 1 and Fig. 2, identical.

In Fig. 3 a variation is shown, wherein two 20 feet containers 33, 34 are positioned on chassis 20. Between both containers 33, 34 there is an interstice of about 5 feet, such that the total length of both containers on chassis 20 is substantially identical to a 45 feet container's length, as shown in Fig. 2.

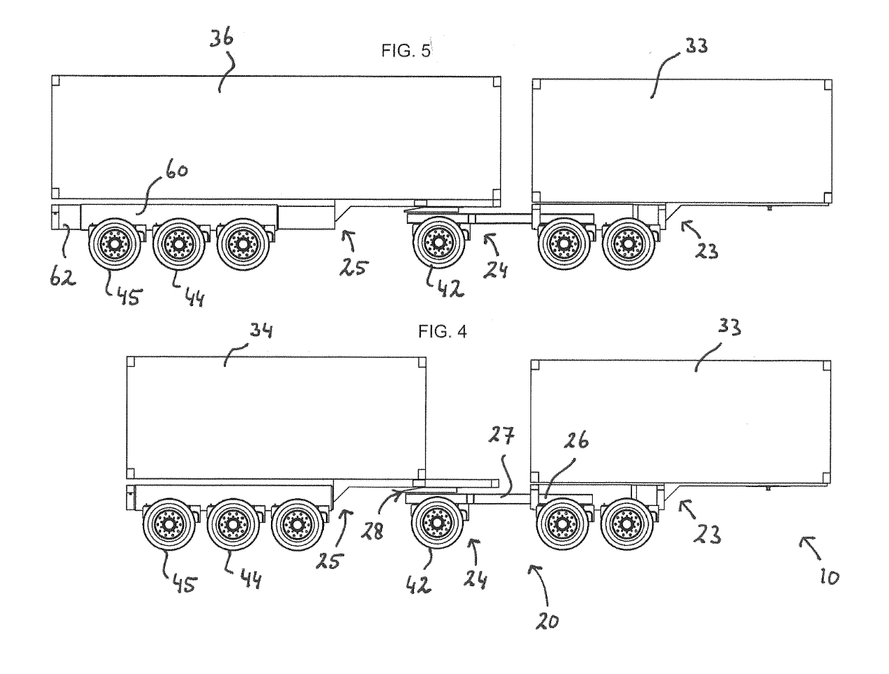

Fig. 4 shows a schematic representation of a trailer 10 according to the invention, wherein it has been shown clearly that chassis 20 is constructed of a first chassis part 23 and a second chassis part 24 which are mutually slidable; in the embodiment shown, these are partially slid out of each other. The second chassis part 24 can be embodied like a dolly 24, as will be explained hereinafter. In a suitable way, the first chassis part 23 comprises a hollow beam 26 and the second chassis part 24 comprises an I-beam or a hollow beam 27. Beam 27 is receivable within hollow beam 26 like a male-female connection. Both beams 26, 27 may comprise mutually cooperating apertures, in which a locking pin may be positioned so as to secure, or lock, beams 26, 27 with respect to each other. By providing a plurality of apertures along the length of at least one of said beams, said beams may be slid and secured at several lengths.

The combination according to Fig. 4 further comprises a third chassis part 25. Said third chassis part 25 is a so-called goose-neck chassis comprising a kingpin (not shown in Fig. 4) and which is connectable to a fifth wheel 28, said fifth wheel being provided on second chassis part 24. This way, third chassis part 25 is connected rotatably (also identified as hingedly or pivotally) to second chassis part 24.

In the embodiment according to Fig. 1 three chassis parts 23, 24, 25 have been provided. In the combination as shown in Fig. 1 however, second chassis part is positioned against first chassis part 23 by sliding hollow beam 27 maximally in hollow beam 26. This way, chassis parts 25 and 23 are positioned against each other, and as a consequence chassis part 25 is not rotatable with respect to chassis part 23. This provides a stable coupling between chassis parts 23, 24, 25.

The embodiment according to Fig. 4 provides the advantage that chassis part 25 can be uncoupled, together with container 34, for loading or unloading same, and wherein chassis part 23 together with container 33, can be transported to another location. As a matter of fact, second chassis part 24 can stay coupled to third chassis part 25 when container 34 is unloaded or loaded. Also, second chassis part 24 can remain coupled to chassis part 23 and be transported to another location, together with chassis part 23 and container 33. Also, chassis part 24 can be stored separately at another location.

The combination as shown in Fig. 4 provides a flexible combination that is easily manoeuvrable. A further improvement is obtained by embodying axles of wheels 42, connected to chassis part 24, as steering axles. Furthermore, at least one of the axles to which wheels 44, 45 are connected, may be provided as a steering axle.

Fig. 5 shows a variation of the trailer according to the invention, wherein a 20 feet container 33 is positioned on first chassis part 23 and wherein a 30 feet container 36 is positioned on both chassis parts 24 and 25. Furthermore, chassis part 25 has been elongated with respect to the situation as shown in Fig. 4. To this end, chassis part 25 comprises an extendable chassis-sub part 62. Said chassis sub-part 62 is accommodated slidably within a chassis sub-part 60. This may be a hollow beam construction, mainly analogously to construction 26, 27 as mentioned above. Said extension, also identified as sliding or telescoping, may be performed electrically, pneumatically, hydraulically, mechanically or in any other suitable way. As a consequence, the chassis part's 25 length can be easily adapted to a container of any desired length that is to be transported using the present trailer.

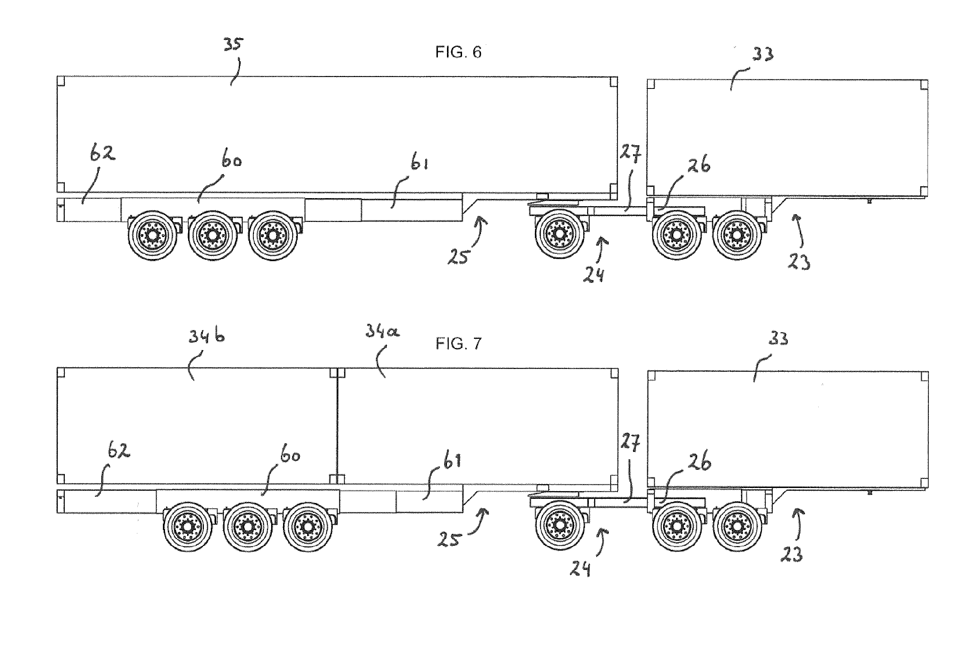

Fig. 6 and Fig. 7 show two further embodiments of a trailer according to the present invention. A 30 feet container 36 as shown in Fig. 5 has been replaced in Fig. 7 by a 40 feet container 35 and in Fig. 6 by two 20 feet containers 34a, 34b. So as to be able to position said 40 feet container 35 on said second and third chassis part 24, 25 the third chassis part 25 is also provided with an extendable chassis sub-part 62, that is accommodated telescopically in chassis construction part 60. To this end also, hollow beam or I-beam constructions may be applied, analogous to the hollow beams or I-beams 26, 27. The locking of chassis sub-parts 61, 62 to chassis accommodating part 60 may be accomplished by means of locking pins, as well as electrically or hydraulically, or a combination thereof.

Telescoping, or extending, beams 61, 62 in and out of the chassis accommodating part 60 can be performed electrically, hydraulically, pneumatically or in any other desired and suitable way. Combinations thereof are possible as well. Also, a manual operation is possible, for example using a hand winch.

Hollow beam or I-beam 27 as described above with reference to Fig. 4 can be slid in and out of hollow beam 26 analogously.

The variation as shown in Fig. 7 is deviant from the embodiment as shown in Fig. 6. Chassis sub-parts 61, 62 in Fig. 7 have each been slid out less or more, respectively, from chassis sub-part 60. This way, the wheeled axle is positioned somewhat more to the centre of chassis part 25 than it is in the embodiment of Fig. 6. As a consequence, a different weight distribution is obtained.

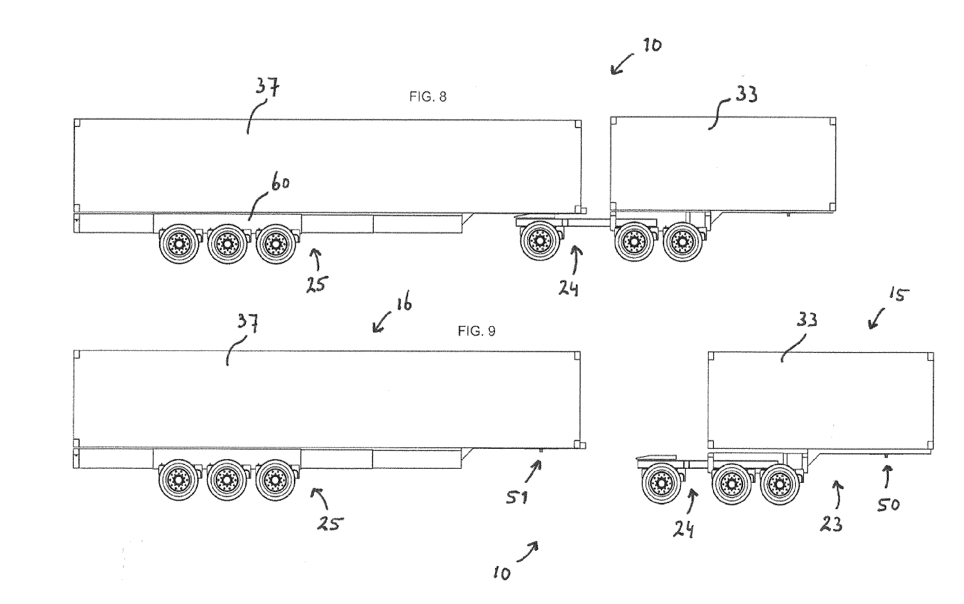

Fig. 8 shows a variation with a different embodiment and wherein the 40 feet container 35 of Fig. 7 has been replaced by a 45 feet container 37. Both chassis sub-parts have been slid out of chassis sub-part 60 maximally.

Fig. 9 shows a separate trailer 10. The first chassis part 23 with container 33 has been coupled to dolly 24. Chassis part 25 carries container 37. Both trailer parts 15, 16, each embodying a separate trailer, can as such be coupled to a truck's fifth wheel (not shown) by means of kingpins 50 and 51, respectively.

Finally, fig. 10 shows a set of disconnected trailers 15, 16 and a separate dolly 24. Trailer 15 comprises said first chassis part carrying container 33. Second trailer 16 comprises said third chassis part carrying container 37. Both containers 33, 37 may be unloaded separately.

As an alternative embodiment, dolly 24 (i.e. second chassis part 24) may be coupled to said first chassis part 23 whereas third chassis part 25 carrying container 35 may be transported by means of another truck. To that end, the kingpin 51 of third chassis part 25 may be coupled to a fifth wheel of such other truck.

The invention is not limited to the embodiments and variations as mentioned above and shown in the drawing. The invention is limited only by the accompanying claims.

The invention also relates to every combination of separate features and measures that have been described herein independently of each other.

## Claims

1. A trailer for a vehicle, comprising:
- a first chassis part comprising a king pin at a front end for coupling to a truck, and a wheeled axle for supporting said first chassis part on a ground at a relatively tail end portion; and
- a second chassis part comprising a wheeled axle for supporting said second chassis part on the ground, said second chassis part being coupled to said first chassis part;
**characterized in that** said second chassis part and said first chassis part are mutually coupled in a longitudinally slidable and removable way, and **in that** said second chassis part comprises a fifth wheel; and **in that** the trailer further comprises a third chassis part comprising a kingpin for coupling to said second chassis' fifth wheel and wherein said third chassis part comprises a wheeled axle for supporting said third chassis part on a ground.

2. A trailer according to claim 1, wherein both chassis parts are positionable adjacently, such that the chassis parts are not mutually rotatable or swivable.

3. A trailer according to claim 1 or 2, wherein both the first and the third chassis part comprise coupling means for coupling said second chassis part in a slidable and removable fashion.

4. A trailer according to claim 1 - 3, wherein at least one of said first and third chassis parts comprises at least two chassis sub-parts, which are mutually slidable in a longitudinal direction and which are mutually coupled, for varying the length of said chassis part.

5. A trailer according to claim 1 - 4, wherein the slidable coupling of said first and second chassis part comprises two beams, for example I-beams or hollow beams, one of said beams being at least partly receivable in said other beam.

6. A trailer according to any of the preceding claims, wherein at least one of the first and third chassis parts comprises a liftable axle.

7. A trailer according to any of the preceding claims, wherein the first chassis part is a goose-neck type chassis.

8. A trailer according to any of the preceding claims, wherein the third chassis part is a goose neck-type chassis.

9. A trailer according to any of the preceding claims, wherein said trailer is suitable for transporting containers.

10. A combination of a truck and a trailer according to any of the preceding claims.

11. A chassis for use in a trailer according to any of claims 1 - 9, said chassis comprising a first chassis part comprising a king pin at its front end for coupling to a truck, and a wheeled axle for supporting said chassis part on a ground at a relatively tail end portion; and - a second chassis part comprising a wheeled axle for supporting said second chassis part on the ground, said second chassis part being suitable for being coupled to said first chassis part, **characterized in that** said second chassis part is coupled longitudinally slidable to said first chassis part and **in that** said second chassis part comprises a fifth wheel for coupling to a third chassis part's king pin.
